# EUROPEAN PATENT APPLICATION

(11) **EP 4 435 666 A1**
(43) Date of publication of application: **25.09.2024**
(21) Application number: 23862103.1
(22) Date of filing: 02.08.2023
(51) Int. Cl.: G06K 7/14, G09F 3/03, G06K 19/06, G06K 19/077

(54) **ANTI-COUNTERFEITING METHOD AND SYSTEM BASED ON MULTIPLE LAYERS OF IDENTIFICATION CODES, AND IDENTIFICATION METHOD BASED ON MULTIPLE LAYERS OF IDENTIFICATION CODES**

(30) Priority: 09.09.2022 CN 202211105673
(71) Applicant: Song, Haimei, Nanjing, Jiangsu 210012 (CN)
(72) Inventor: Song, Haimei, Nanjing, Jiangsu 210012 (CN)
(74) Representative: Lermer, Christoph
(86) International application number: PCT/CN2023/110741
(87) International publication number: WO 2024/051403

(57) **Abstract**

An anti-counterfeiting method and system based on multiple layers of identification codes, and an identification method based on multiple layers of identification codes. The anti-counterfeiting method comprises: within a set time period, pairing an anti-counterfeiting secret code and an anti-counterfeiting plain code that are associated; providing the anti-counterfeiting secret code on a product and gluing and covering the anti -counterfeiting plain code to a local region or the whole region of the anti-counterfeiting secret code. The present application has the effect of improving the anti-counterfeiting performance of existing anti-counterfeiting labels.

## Description

### Technical Field

An anti-counterfeiting method and system based on multiple layers of identification codes, and an identification method based on multiple layers of identification codes.

### Background Art

Most of the existing products require printing and packaging with anti-counterfeiting functions, so the outer surface of some products will be attached with a label with anti-counterfeiting QR code. Users can check the product quality information and regional information by scanning the QR code on their smart phones.

There is an anti-counterfeiting label in the prior art, which includes an anti-counterfeiting carrier with an image, the image is an arranged distribution of graphics, and the image is printed with a QR code, at this time the label can also be called an anti-counterfeiting label. The manufacturer retains the image of the anti-counterfeiting label, and the user takes the anti-counterfeiting label to identify the QR code and the image not covered by the QR code to the manufacturer, and the manufacturer determines the authenticity of the anti-counterfeiting label by identifying the QR code and the image covered by the QR code in the background.

However, some personnel on the existing market will use the dryer to melt the glue of the anti-counterfeiting label, and then easily remove the anti-counterfeiting label completely, and then glue the torn orientation label onto other products, which makes the anti-counterfeiting effect of the existing anti-counterfeiting label to be improved.

### Contents of Invention

In order to improve the anti-counterfeiting effect of existing anti-counterfeiting labels, this application provides an anti-counterfeiting method, system and identification method based on multi-layer identification code.

First, this application provides an anti-counterfeiting method based on multi-layer identification code, which adopts the following technical scheme:
An anti-counterfeiting method based on multi-layer identification code comprises the following steps:
Match the associated anti-counterfeiting secret code and anti-counterfeiting plain code within the set period;
The anti-counterfeiting code is arranged on the product;
In addition, the anti-counterfeiting plain code adhesive is glued to cover a partial area or all area of the anti-counterfeiting secret code.

Through the adoption of the above technical scheme, the anti-counterfeiting effect can be upgraded after the association between the anti-counterfeiting secret code and the anti-counterfeiting plain code, that is, if the decoder does not destroy the anti-counterfeiting plain code, the anti-counterfeiting plain code can only be recognized, and the decoder cannot get the matching relationship with the anti-counterfeiting secret code, so that the decoding fails. In order to identify the anti-counterfeiting secret code, the anti-counterfeiting plain code needs to be torn. In particular, when the label is used to seal the bottle and/or the packaging box, only the damaged label can use the product of the packaging bottle or the packaging box, and tearing the anti-counterfeiting plain code can cause damage to the label, which can reduce the opportunity for the decoder to reuse the label, and also allow the user to improve the vigilance of anti-counterfeiting after seeing the damaged label, thus improving the anti-counterfeiting effect.

As a preferred option, the steps for pairing out the associated anti-counterfeiting secret code and anti-counterfeiting plain code within a set period of time also include:
The same associated content is used to keep anti-counterfeiting secret code associated with anti-counterfeiting plain code within the specified period of time;
After the set time period, the next set of anti-counterfeiting secret codes and
anti-counterfeiting plain codes are re-associated with different associated contents.

By using the above technical solution, the set time period is used to reserve the time for printing labels for the printing equipment, and the associated content is changed after the set time period is printed, so that different groups of anti-counterfeiting codes will not be incorrectly associated with each other.

As an optimization, the anti-counterfeiting secret code comprises a first code and the second code;
The steps for setting the anti-counterfeiting secret code on the product also include:
The first secret code is arranged on the product, and the second secret code is covered to a partial area or all area of the first secret code;
The steps for covering the anti-counterfeiting plain code to a local area or all area of the anti-counterfeiting secret code also include:
   The anti-counterfeiting plain code is covered to a partial area or all area of the second anti-counterfeiting secret code.

By using the above technical solution, the anti-counterfeiting secret codes can include multiple secret codes, and multiple secret codes can be stacked, and then covered by the anti-counterfeiting plain code, multiple secret codes enhance the difficulty of violent decoding, which is conducive to improving the anti-counterfeiting effect.

As an optimization, the anti-counterfeiting plain code comprises a first plain code and the anti-counterfeiting secret code;
The steps for covering the anti-counterfeiting plain code to a local area or all area of the security code also include:
The first anti-counterfeiting plain code is covered to the local area of the anti-counterfeiting secret code;
In addition, the second plain code is covered in the remaining local area of the anti-counterfeiting secret code

By using the above technical solution, the anti-counterfeiting plain codes can include multiple plain codes, and the multiple plain codes can be stacked, and the multiple plain codes enhance the difficulty of violent decoding, which is conducive to improving the anti-counterfeiting effect.

As a preferred option, the steps to pair out the associated anti-counterfeiting secret codes and anti-counterfeiting plain codes within a set period of time also include:
After the anti-counterfeiting secret codes is associated with the anti-counterfeiting plain codes,
an instantaneously identical variable random feature is simultaneously set on the secret code and the plain code, and the variable random feature is generated by a preset random program;
In addition, the variable random feature is refreshed after the setting is complete.

Through the adoption of the above technical scheme, after verifying the anti-counterfeiting plain code and anti-counterfeiting secret code, it can also continue to verify the authenticity by verifying whether the variable random features of the two are the same, which improves the difficulty of violent decoding and helps to improve the anti-counterfeiting effect.

As a preferred option, the methods for refreshing include:
The variable random feature on the anti-counterfeiting secret code is different from the variable random feature on the anti-counterfeiting plain code;
In addition, when the variable random feature on the anti-counterfeiting secret code changes, the variable random feature on the anti-counterfeiting plain code changes; And/or, when the variable random feature on the anti-counterfeiting plain code changes, the variable random feature on the anti-counterfeiting secret code changes.

By using the above technical solution, the equipment for printing anti-counterfeiting plain code and the equipment for printing anti-counterfeiting secret code can run independently in two sets of random programs in a relatively physical isolation state, only allowing the results to produce the same management instantaneously, improving the randomness, and ensuring consistency to improve the anti-counterfeiting effect.

As a preference, the variable random features include images, words, and/or numbers.

By using the above technical scheme, images, words and numbers can make the variable random features have more general recognizable features, which is conducive to verifying the authenticity.

As a preference, the middle part of the anti-counterfeiting plain code is provided with a tearing part, and the position of the tearing part overlaps with the position of the anti-counterfeiting secret code

By using the above technical solution, the tear part that is easier to tear, the anti-counterfeiting plain code can be easily destroyed when the anti-counterfeiting secret code needs to be identified, and the opportunity of repeated use of labels can be reduced.

Second, this application provides an anti-counterfeiting system based on multi-layer identification code, using the following technical solutions:
An anti-counterfeiting system based on multilayer identifiers includes a module running a computer program capable of being loaded by a processor and executed by any of the above-mentioned anti-counterfeiting methods based on multilayer identifiers.

Thirdly, this application provides a recognition method based on multi-layer identification code, which adopts the following technical scheme:
The invention relates to an identification method based on multi-layer identification code.
Based on the method mentioned above, the identification method consists of the following steps:
   Extract the clear code information recorded in the anti-counterfeiting plain code;
   If the code information recorded in the anti-counterfeiting secret code can be extracted directly, the secret code information is output; otherwise, the anti-counterfeiting secret code is extracted and output after tearing down the anti-counterfeiting plain code and exposing the anti-counterfeiting secret code;
   According to the preset matching algorithm, the association information corresponding to the anti-counterfeiting plain code information and the anti-counterfeiting secret code information is matched from the pre-stored association information set.
   If the association information is empty, the information that is not associated with the information of plain code and secret code is output; If the association information is not empty, the information that is associated with the information of plain code and secret code is output.

By using the above technical scheme, the plain code information is extracted first, and then the secret code information is extracted, and then the matching result of the plain code information and the secret code information is calculated, and the relevant identification information is output according to the matching result to realize the recognition of multi-layer identification code.

### Description of Figures

FIG. 1 is the flow diagram of the anti-counterfeiting method based on multi-layer identification code in this application;
FIG. 2 is the method flow diagram of the associated content in the anti-counterfeiting method based on multi-layer identification code in this application;
FIG. 3 is a schematic diagram of the method flow of setting variable random features in the anti-counterfeiting method based on multi-layer identification code.
Figure 4 is a schematic diagram of the method flow of variable random feature refresh in this application;
FIG. 5 is the schematic diagram of the method flow of the identification method based on multi-layer identification code in this application.

### Specific Mode for Carrying out the Invention

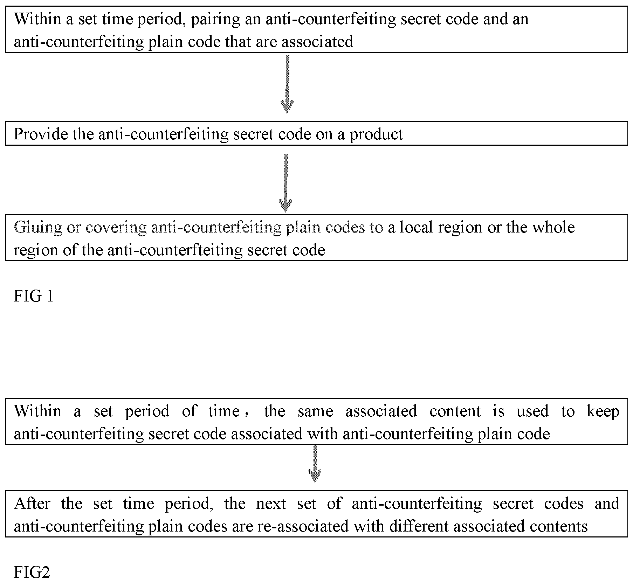

Further details of this application are provided below in conjunction with Figure 1-5 attached.

This application embodiment discloses an anti-counterfeiting method based on multi-layer identification code. Referring to Figure 1, an anti-counterfeiting method based on multi-layer identification code includes the following steps:
Within a set time period, pairing an anti-counterfeiting secret code and an anti-counterfeiting plain code that are associated; Among them, the anti-counterfeiting secret code refers to the identification code or the label with the identification code, the identification code can be QR code, bar code and other internal image code that can be recognized by the image. The pairing operation is performed by a label printing device commonly used in prior art. The label printing device is equipped with processing modules such as industrial computer, MCU, FPGA, etc. The processing module has a preset program for generating the identification code, and the required identification code can be generated by running the program. The label printing device can output the digital information of the identification code. The digital information of the identification code can even be directly printed or engraved on the product, or a label printed with the identification code can be output, and then the label is affixed to the product.

In this embodiment, the anti-counterfeiting secret code and the anti-counterfeiting plain code can be generated by the same label printing device, and the label printing device data is connected to the management platform and transmits data to the management platform. The data can be all the cached data generated during the operation of the label printing device and the data to be stored. As shown in Figure 2, during the above set period, the same associated content is used to keep the anti-counterfeiting secret code associated with the anti-counterfeiting plain code, and the associated content can be stored in the processing module of the label printing device in advance, or generated and stored in real time by the processing module. The set time period can be 0.1 seconds or 1 second, when the set time period is short enough, the processing module generates multiple groups of associated anti-counterfeiting secret codes and anti-counterfeiting plain codes, but only one or several groups of generated groups are output; When the set time period is matched with the printed time period, the processing module can also generate a group of associated anti-counterfeiting secret code and anti-counterfeiting plain code and output a group of associated anti-counterfeiting secret code and anti-counterfeiting plain code. After the processing module generates or outputs a set of associated anti-counterfeiting secret code and anti-counterfeiting plain code, it re-associates the next set of anti-counterfeiting secret code and anti-counterfeiting plain code with different associated content, that is, the currently generated associated content is different from that of the previous set of anti-counterfeiting secret code and anti-counterfeiting plain code, and the best thing is that each associated content generated by the processing module is unique.

The anti-counterfeiting secret code is set on the product. If the label printing device outputs a label with an anti-counterfeiting secret code, the label is affixed to the product through an automated production line or manually. If the label printing device can print, the anti-counterfeiting secret code can be printed directly on the product. If the label printing device can be engraved, the anti-counterfeiting secret code can be engraved on the product. After the label printing device outputs the anti-counterfeiting plain code, the anti-counterfeiting plain code adhesive is glued to the anti-counterfeiting secret code. At this time, the label of the anti-counterfeiting plain code can come with glue or set a separate gluing process to cover the local area or all area of the anti-counterfeiting secret code. At this time, the label of the anti-counterfeiting plain code can be set to be transparent, if the transparent material, the side of the anti-counterfeiting plain code can reveal a part of the anti-counterfeiting secret code, the anti-counterfeiting secret code can also be completely covered by the anti-counterfeiting plain code, in addition, the label of the anti-counterfeiting plain code can be set to opaque, so that the anti-counterfeiting secret code is completely covered by the anti-counterfeiting plain code. In order to further improve the anti-counterfeiting effect, the tearing part can be set in the middle part of the anti-counterfeiting plain code before pasting the anti-counterfeiting plain code, and the tearing part can be dotted line formed by pressing, and the position of the tearing part overlaps with the position of the anti-counterfeiting secret code, which improves the difficulty of the decoder to uncover the anti-counterfeiting plain code without loss, and further reduces the opportunity of repeated use of the label.

In other cases, in order to further improve the anti-counterfeiting effect and decoding difficulty, the anti-counterfeiting secret code includes the first secret code and the second secret code. The first secret code can be the identification code directly printed or engraved on the product, or it can be the label with the identification code. The first secret code is set on the product, and the second secret code is the label with the identification code. Cover the second secret code to the first secret code of the partial area or all of the area, and then cover the anti-counterfeiting plain code to the second secret code of the partial area or all of the area. Similarly, the anti-counterfeiting plain code can also include the first plain code and the second plain code, the first plain code and the second plain code are labels with identification codes, cover the first plain code to the local area of the secret code, and then cover the second plain code to the remaining local area of the secret code.

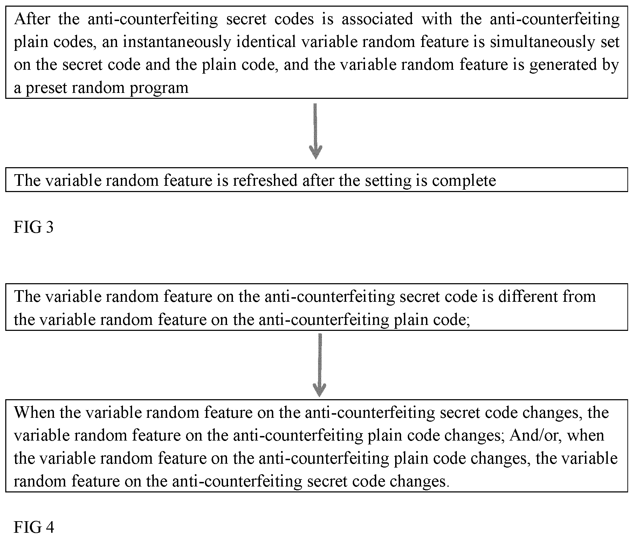

In other cases, a label printing device can also be used to generate anti-counterfeiting secret codes, and another identical label printing device can generate anti-counterfeiting plain codes, and two label printing devices can be connected to each other or to the same management background data. In this case, as shown in Figure 3, after the anti-counterfeiting secret code is associated with the anti-counterfeiting plain code, and before the output of the anti-counterfeiting secret code and the anti-counterfeiting plain code, the processing device sets instantaneously identical variable random features on the anti-counterfeiting secret code and the anti-counterfeiting plain code at the same time, and the variable random features are generated by the preset random program. Variable random features include images, words and/or numbers, which may be miniaturized images and may surround the identifier. The setting method can be to superposition variable random features on the anti-counterfeiting secret code and the anti-counterfeiting plain code to be output. For example, the pixels and sizes of the image data with variable random features are consistent with those of the anti-counterfeiting secret code or the anti-counterfeiting plain code. The setting process is as follows: The value of pixels corresponding to the image data of the anti-counterfeiting secret code or anti-counterfeiting plain code in the image data of the variable random feature is added to the value of pixels corresponding to the image data of the anti-counterfeiting secret code or anti-counterfeiting plain code, that is, the variable random feature is copied on the anti-counterfeiting secret code or anti-counterfeiting plain code.

After the processing module is set up, the variable random feature is refreshed, as shown in Figure 4. The refreshing methods include: the variable random feature on the anti-counterfeiting secret code changes with the variable random feature on the anti-counterfeiting plain code. The different changes include: when the variable random feature on the anti-counterfeiting secret code changes, the variable random feature on the anti-counterfeiting plain code changes; In addition, when the variable random feature on the anti-counterfeiting plain code changes, the variable random feature on the anti-counterfeiting secret code changes with it. It can make the equipment of printing anti-counterfeiting plain code and the equipment of printing anti-counterfeiting secret code run independently of two sets of random programs in a relatively physical isolation state, only allowing the results to produce the same management instantaneously, improving the randomness, but also ensuring consistency and improving the anti-counterfeiting effect.

The embodiment also discloses an anti-counterfeiting system based on multi-layer identifiers, including a module running a computer program capable of being loaded by a processor and executing any of the above-mentioned anti-counterfeiting methods based on multi-layer identifiers.

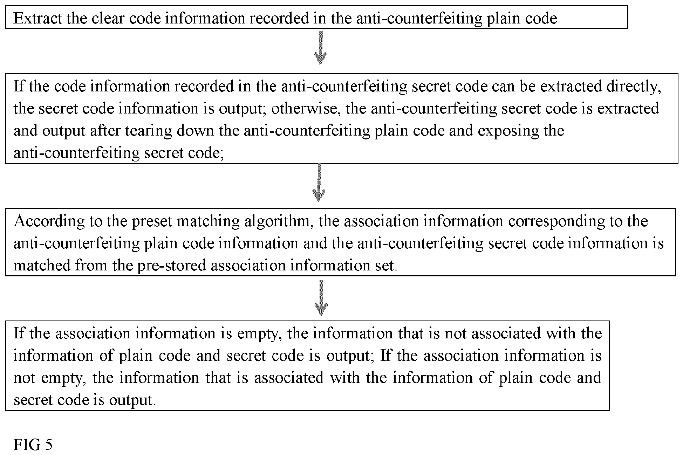

The embodiment also discloses an identification method based on multi-layer identification code. Based on the method of multi-layer identification code mentioned above, as shown in Figure 5, the identification method includes the following steps:
Extract the plain code information recorded in the anti-counterfeiting plain code. If the secret code information which is recorded in the anti-counterfeiting secret code can be extracted directly, output the secret code information, otherwise tear off the anti-counterfeiting plain code and expose the anti-counterfeiting secret code, and then extract and output the secret code information. The plain code information is the associated content corresponding to the anti-counterfeiting plain code, and the secret code information is the associated content corresponding to the anti-counterfeiting secret code. According to the preset matching algorithm, the association information corresponding to the plain code information and the secret code information is matched from the pre-stored association information set. If the association information is empty, the plain code information is not associated with the secret code information. If the association information is not empty, the plain code information is associated with the secret code information.

In the case that the anti-counterfeiting plain code is intact, if the user queries the authenticity of the product, he can shoot the anti-counterfeiting plain code through the camera of the handheld smart terminal, and then by running the preset program can also be the preset matching algorithm to identify the associated content of the anti-counterfeiting plain code, and then tear private security code destructively, and then shoot the anti-counterfeiting secret code through the camera of the handheld smart terminal. Then, by running the preset program, the associated content in the anti-counterfeiting secret code is identified. If the associated content in the anti-counterfeiting plain code and the associated content in the anti-counterfeiting secret code are consistent or in line with the preset association relationship or association information, it means that the product is true, and the preset program will output the product is true information. If the malicious decoder queries the authenticity of the product, the label cannot be reused after finding out the authenticity of the product. In the case that the anti-counterfeiting plain code is destroyed, the user can directly shoot the anti-counterfeiting secret code through the camera of the handheld intelligent terminal, and then by running the preset program, identify the associated content of the anti-counterfeiting secret code, and output the information representing the authenticity of the product according to the response content of the associated content of the preset program. If the anti-counterfeiting secret code is damaged, it is impossible to find out the authenticity of the product. In this embodiment, the handheld intelligent terminal can be a smart phone, and the preset program can be an APP or WeChat program connected to the data of the management platform.

The above are all preferred embodiments of this application, and the present invention is not limited to the above embodiments. It is understood that other improvements and changes directly derived or associated by those skilled in the art without departing from the spirit and conception of the present invention should be considered to be included in the scope of protection of this invention.

## Claims

1. An anti-counterfeiting method based on multi-layer identification code, which is **characterized in** the following steps:
within a set time period, pairing an anti-counterfeiting secret code and an anti-counterfeiting plain code that are associated;
Providing the anti-counterfeiting secret code on a product;
and gluing and covering the anti-counterfeiting plain code to a local region or the whole region of the anti-counterfeiting secret code.

2. A method according to claim 1, it is **characterized in that** the steps of pairing an anti-counterfeiting secret code and an anti-counterfeiting plain code that are associated within a set period of time also include:
Within the set time period, the same association content is used to keep the anti-counterfeiting secret code and the anti-counterfeiting plain code;
After the set time period, the next set of anti-counterfeiting secret code and the anti-counterfeiting plain codes are re-associated with different associated contents.

3. A method according to claim 1, the method is **characterized in that** the anti-counterfeiting secret code includes the first secret code and the second secret code;
The steps for setting the anti-counterfeiting secret code on the product also include:
The first code is arranged on the product, and the second code is covered to a partial area or
all area of the first code;
The steps for covering the security code to a local area or all area of the security code also include:
Covering the anti-counterfeiting plain code to a local region or the whole region of the anti-counterfeiting secret code

4. A method according to claim 1, the method is **characterized in that** the anti-counterfeiting plain code includes the first plain code and the second plain code;
The steps for covering the anti-counterfeiting plain code to a local region or the whole region of the anti-counterfeiting secret code, also include:
The first plain code is covered to the local region area of the anti-counterfeiting secret code;
In addition, the second plain code is covered in the remaining local region area of the anti-counterfeiting secret code.

5. A method according to claim 1, it is **characterized in that** the steps of pairing an anti-counterfeiting secret code and an anti-counterfeiting plain code that are associated within a set period of time also include:
After the anti-counterfeiting secret code is associated with the anti-counterfeiting plain code, an instantaneously identical variable random feature is simultaneously set on the anti-counterfeiting secret code and the anti-counterfeiting plain code, and the variable random feature is generated by a preset random program;
In addition, the variable random feature is refreshed after the setting is complete.

6. A method according to claim 5, it is **characterized in that** the method of refreshing includes:
The variable random feature on the anti-counterfeiting secret code is different from the variable random feature on the anti-counterfeiting plain code;
In addition, when the variable random feature on the anti-counterfeiting secret code changes, the variable random feature on the anti-counterfeiting plain code changes too; And/or, when the variable random feature on the anti-counterfeiting plain code changes, the variable random feature on the anti-counterfeiting secret code changes.

7. A method according to claim 5, it is **characterized in that** the variable random features include images, words and/or numbers

8. A method according to claim 1, it is **characterized in that** the middle part of the anti-counterfeiting plain code is provided with a tearing part, and the position of the tearing part overlaps with the position of the anti-counterfeiting secret code.

9. An anti-counterfeiting system based on multi-layer identifications is **characterized by** including a module running a computer program capable of being loaded by a processor and executing any of the anti-counterfeiting methods based on multi-layer identifications described in claim 1-8.

10. An identification method based on a multi-layer identification code is **characterized in that**:
an anti-counterfeiting method based on a multi-layer identification code described in any of the claims 1-8, the identification method comprises the following steps:
Extract the plain code information recorded in the anti-counterfeiting plain code;
If the code information recorded in the anti-counterfeiting secret code can be extracted directly, the secret code information is output; otherwise, the secret code is extracted and output after tearing down the anti-counterfeiting plain code and exposing the anti-counterfeiting secret code;
According to the preset matching algorithm, the association information corresponding to the plain code information and the secret code information is matched from the pre-stored association information set.
If the association information is empty, the information that is not associated with the information of plain code and secret code is output; If the association information is not empty, the information that is associated with the information of plain code and secret code is output.
